# EUROPÄISCHE PATENTSCHRIFT

(11) **EP 2 085 257 B1**
(45) Veröffentlichungstag und Bekanntmachung des Hinweises auf die Patenterteilung: **19.01.2011**
(21) Anmeldenummer: 08021492.7
(22) Anmeldetag: 11.12.2008
(51) Int. Cl.: B60C 27/10

(54) **Vorrichtung zum Verhindern eines Durchdrehens oder Durchrutschens eines Rades eines Fahrzeugs**
Device for prevent the slipping or spinning of a vehicle's wheel
Dispositif destiné à éviter un patinage ou un glissement d'une roue de véhicule

(30) Priorität: 31.01.2008 DE 102008006827
(43) Veröffentlichungstag der Anmeldung: 05.08.2009
(73) Patentinhaber: Grizzly Snow Grip GmbH, 90461 Nürnberg (DE)
(72) Erfinder: Hollfelder, Alfred, 91301 Forchheim (DE)
(74) Vertreter: Führing, Dieter

(56) Entgegenhaltungen:
- EP-A- 0 791 489
- DE-A1- 4 121 737

## Beschreibung

Die Erfindung betrifft eine Vorrichtung zum Verhindern eines Durchrutschens oder Durchdrehens eines Rades eines Fahrzeugs, insbesondere eines Lastkraftwagens oder eines Omnibusses, mit einem einseitig offenen Ringelement, dessen Ringelement-Öffnung von einem Spannorgan überbrückt ist, wobei am Ringelement erste Hakenelemente fixiert und zweite Hakenelemente verstellbar vorgesehen sind, und die ersten und zweiten Hakenelemente zum Festlegen von Kettenelementen vorgesehen sind.

Aus der DE 41 21 737 C2 der Anmelderin ist eine derartige Vorrichtung bekannt. Bei dieser bekannten Vorrichtung sind die zweiten Hakenelemente jeweils an einer Gewindespindel vorgesehen. Der axiale Abstand zwischen den ersten und den jeweils zugehörigen zweiten Hakenelementen ist bei dieser bekannten Vorrichtung mit Hilfe eines an der jeweiligen Gewindespindel vorgesehenen Schraubmutterelementes verstellbar. Diese Schraubbetätigung bedingt einen relativ großen Zeitaufwand.

In Kenntnis dieser Gegebenheiten liegt der Erfindung die Aufgabe zugrunde, eine Vorrichtung der eingangs genannten Art zu schaffen, bei welcher der axiale Abstand zwischen den ersten und den jeweils zugehörigen zweiten Hakenelementen einfach und zeitsparend verstellbar ist, um jeweils ein zugehöriges Kettenelement am Fahrzeug-Rad anbringen und festlegen zu können.

Diese Aufgabe wird bei einer Vorrichtung der eingangs genannten Art erfindungsgemäß dadurch gelöst, dass die zweiten Hakenelemente an Schnellspanneinrichtungen vorgesehen sind, die jeweils ein Betätigungselement, ein Spannfederelement und ein Rastelement aufweisen, wobei das Betätigungselement zum axialen Verstellen des zweiten Hakenelementes und gleichzeitig zum mechanischen Spannen des Spannfederelementes und das Rastelement zum temporären Festhalten des mit dem zweiten Hakenelement eine Einheit bildenden Betätigungselementes im Spannzustand des Spannfederelementes vorgesehen ist.

Mit Hilfe der Schnellspanneinrichtung ist der axiale Abstand zwischen dem jeweiligen, am Ringelement befestigten ersten Hakenelement und dem zugehörigen zweiten Hakenelement vergrößerbar, um zwischen dem ersten und dem zweiten Hakenelement ein das Fahrzeug-Rad übergreifendes Kettenelement anbringen zu können. Das Betätigungselement der Schnellspanneinrichtung bildet gleichzeitig eine Verdrehsicherung in Bezug zur Felge des Fahrzeug-Rades. Das Betätigungselement ist mit dem zugehörigen zweiten Hakenelement der Schnellspanneinrichtung zu einer Einheit fest verbunden, wie bereits erwähnt worden ist.

Erfindungsgemäß hat es sich als vorteilhaft erwiesen, wenn die jeweilige Schnellspanneinrichtung eine an dem Ringelement befestigte Führungsstange und ein an der Führungsstange linear beweglich geführtes Zylindergehäuse aufweist, wobei zwischen der Führungsstange und dem Zylindergehäuse das Spannfederelement vorgesehen ist, und wobei das Zylindergehäuse mindestens ein zweites Hakenelement aufweist. Zweckmäßig ist es, wenn das jeweilige Zylindergehäuse ein Paar zweite Hakenelemente aufweist.

Die jeweilige Führungsstange ist vorzugsweise an einem Laschenelement befestigt, das vom Ringelement radial nach innen weist.

Das Rastelement der jeweiligen Schnellspanneinrichtung ist vorzugsweise abgewinkelt mit einem Befestigungsschenkel und einem Federschenkel ausgebildet, wobei der Befestigungsschenkel am zugehörigen Laschenelement befestigt ist und der Federschenkel im Spannzustand des Spannfederelementes am Zylindergehäuse temporär festlegbar ist. Zu diesem Zwecke hat es sich als vorteilhaft erwiesen, wenn der Federschenkel ein Rastorgan und das Zylindergehäuse eine dem Laschenelement zugewandte Stirnfläche mit einem Wulst aufweist, der zum temporären Festhalten des Rastorgans im Spannzustand des Spannfederelementes vorgesehen ist.

Das Rastorgan kann durch einen U-förmigen Stanzschnitt des Federschenkels und einen abgewinkelten Biegevorgang der durch den Stanzschnitt bestimmten Lasche gebildet sein.

Um eine Verfetzungsgefahr auszuschließen, ist der Federschenkel des jeweiligen Rastelementes zweckmäßigerweise mit einer das durch den Stanzschnitt gebildete Loch überdeckenden Auflage versehen. Bei dieser Auflage kann es sich um ein Plättchen aus einem Gummimaterial o.dgl. handeln.

Das Betätigungselement der jeweiligen Schnellspanneinrichtung ist vorzugsweise als am Zylindergehäuse befestigter Verdrehsicherungsbügel ausgebildet.

Erfindungsgemäß sind die am Ring fixierten ersten Hakenelemente und die Schnellspanneinrichtungen mit den zweiten Hakenelementen entlang des Umfangs des Ringelementes einander abwechselnd verteilt vorgesehen. Dabei können die ersten und zweiten Hakenelemente entlang des Umfangs des Ringelementes bspw. gleichmäßig verteilt vorgesehen sein. Bei einer solchen Ausbildung verlaufen die Kettenelemente über das Fahrzeug-Rad schräg, zick-zack-förmig orientiert, so dass sich eine ausgezeichnete Seitenführung für das entsprechende Fahrzeug ergibt. Selbstverständlich ist es auch möglich, zwischen den ersten und den zweiten Hakenelementen Kettenelemente mit Knotenpunkten festzulegen, um entsprechende Norm-Vorschriften zu erfüllen.

Wenn das Zylindergehäuse der jeweiligen Schnellspanneinrichtung mit einem Paar zweiten Hakenelementen ausgebildet ist, ist es zweckmäßig, wenn auch die ersten Hakenelemente am Ringelement paarweise vorgesehen sind.

Weitere Einzelheiten, Merkmale und Vorteile ergeben sich aus der nachfolgenden Beschreibung eines in der Zeichnung dargestellten Ausführungsbeispieles der erfindungsgemäßen Vorrichtung zum Verhindern eines Durchdrehens oder Durchrutschens eines Fahrzeug-Rades bzw. wesentlicher Einzelteile der erfindungsgemäßen Vorrichtung.

Es zeigen:
Fig.1 eine Vorderansicht des einseitig offenen Ringelementes der Vorrichtung mit den paarweise vorgesehenen ersten Hakenelementen und den Schnellspanneinrichtungen mit den paarweise vorgesehenen zweiten Hakenelementen,
Fig.2 eine Ansicht einer Schnellspanneinrichtung in Blickrichtung des Pfeiles II in Fig.1 mit dem abgeschnitten gezeichneten Ringelement,
Fig.3 eine Ansicht der Schnellspanneinrichtung in Blickrichtung des Pfeiles III in Fig.2.am geschnitten gezeichneten Ringelement,
Fig.4 eine Ansicht eines Paares erster Hakenelemente in Blickrichtung des Pfeiles IV in Fig.1 am abschnittweise gezeichneten Ringelement, und
Fig.5 einen Schnitt entlang der Schnittlinie V-V in Fig.4.

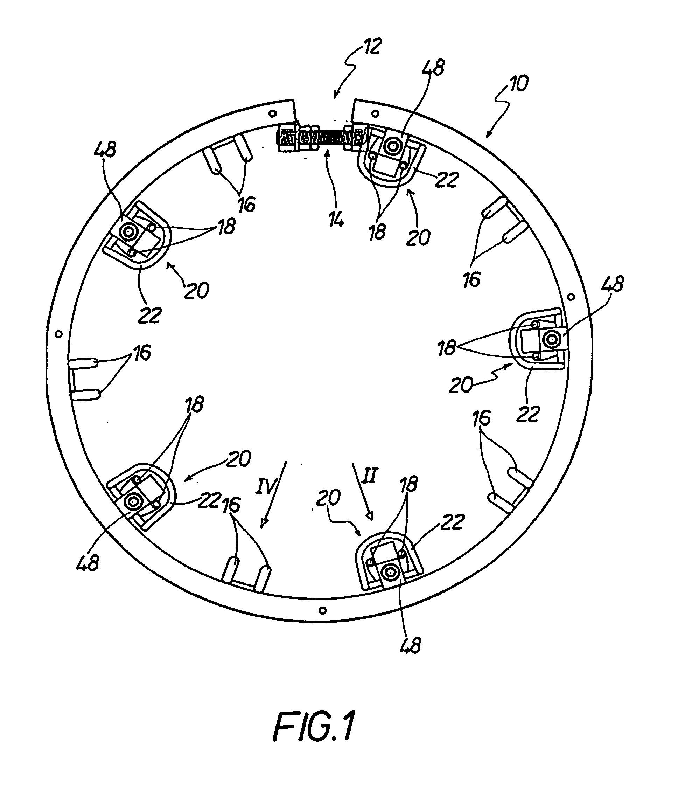

Fig.1 zeigt eine Ausbildung des einseitig offenen Ringelementes 10, dessen Ringelement-Öffnung 12 von einem Spannorgan 14 überbrückt ist. Mit Hilfe des Spannorganes 14 ist das Ringelement 10 aufweitbar, um das Ringelement 10 in einer vorderseitig umlaufenden Nut einer Felge eines Fahrzeug-Rades festzulegen. In diesem Zusammenhang wird auf die eingangs zitierte DE 41 21 737 C2 Bezug genommen.

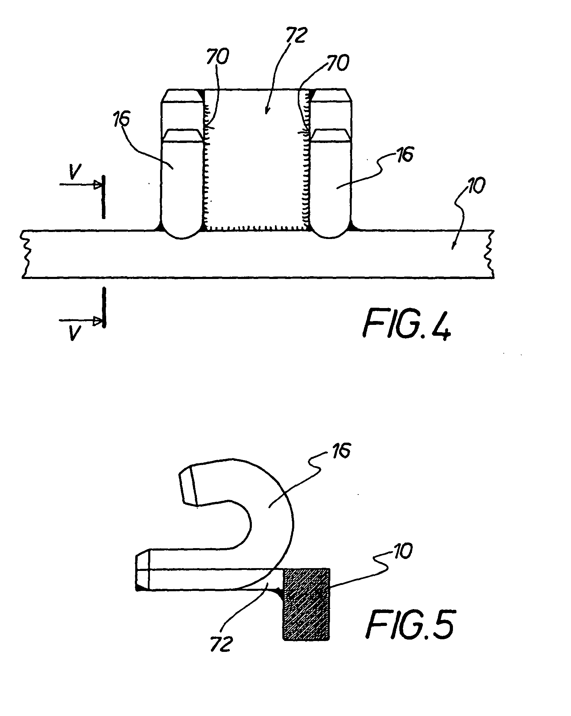

Am Ringelement 10 sind paarweise erste Hakenelemente 16 fixiert, die weiter unten unter Bezugnahme auf die Figuren 4 und 5 beschrieben werden.

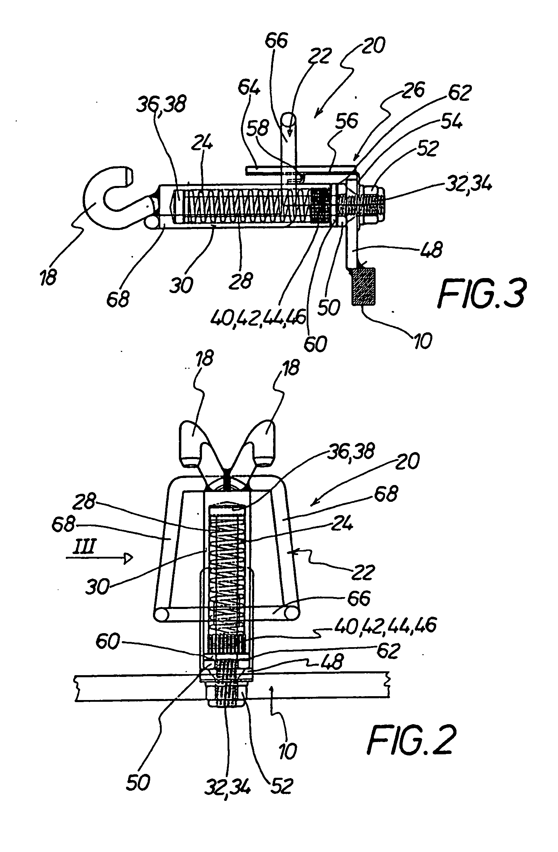

Am Ringelement 10 sind außerdem paarweise zweite Hakenelemente 18 verstellbar vorgesehen, die unten unter Bezugnahme auf die Figuren 2 und 3 detailliert beschrieben werden.

Die ersten und die zweiten Hakenelemente 16 und 18 dienen zum Festlegen von nicht dargestellten Kettenelementen, die um ein nicht gezeichnetes Rad eines Fahrzeuges, insbesondere eines Lastkraftwagens oder eines Omnibusses herum gewunden werden, um ein Durchrutschen bzw. Durchdrehen des Fahrzeug-Rades zu verhindern.

Wie aus den Figuren 2 und 3 ersichtlich ist, sind ein Paar zweite Hakenelemente 18 jeweils an einer zugehörigen Schnellspanneinrichtung 20 vorgesehen. Die jeweilige Schnellspanneinrichtung 20 weist ein Betätigungselement 22, ein Spannfederelement 24 und ein Rastelement 26 auf. Das Betätigungselement 22 bildet eine Verdrehsicherung, mittels welcher die Schnellspanneinrichtung 20 an einer Felge eines Fahrzeug-Rades gegen Verdrehung gesichert wird. Das Betätigungselement 22 ist zum axialen Verstellen des Paares zweiter Hakenelemente 18 vorgesehen, wobei gleichzeitig das Spannfederelement 24 mechanisch gespannt wird. Das Rastelement 26 dient im Spannzustand des Spannfederelementes 24 zum temporären, d.h. freigebbaren Festhalten des Betätigungselementes 22 und somit zum temporären axialen Beabstanden der beiden zweiten Hakenelemente 18 in Bezug zu den zugehörigen beiden ersten Hakenelementen16.

Die jeweilige Schnellspanneinrichtung 20 weist eine an dem Ringelement 10 befestigte Führungsstange 28 und ein an der Führungsstange 28 linear beweglich geführtes Zylindergehäuse 30 auf. Die Führungsstange 28 ist an ihrem proximalen einen Endabschnitt 32 mit einem Außengewindeabschnitt 34 und an ihrem davon entfernten distalen Ende 36 mit einem Widerlagerkopf 38 für das von einer Schraubendruckfeder gebildeten Spannfederelement 24 ausgebildet. Das Spannfederelement 24 ist zwischen dem Widerlagerkopf 38 der Führungsstange 28 und einem Schraubmutterelement 40 eingespannt, das mit einem Außengewindeabschnitt 42 ausgebildet ist und durch das sich die Führungsstange 28 linear beweglich hindurch erstreckt. Das Schraubmutterelement 40 ist mit seinem Außengewindeabschnitt 42 in einen Innengewindeabschnitt 44 eingeschraubt, der am proximalen Ende 46 des Zylindergehäuses 30 ausgebildet ist. Damit ist das Zylindergehäuse 30 mittels des Widerlagerkopfes 38 der Führungsstange 28 und mittels des Schraubmutterelementes 40, durch das sich die Führungsstange spielfrei hindurch erstreckt, linear beweglich geführt.

Die Führungsstange 28 ist an einem Laschenelement 48 befestigt, das vom Ringelement 10 radial nach innen weist. Die Befestigung der Führungsstange 28 am Laschenelement 48 erfolgt mittels eines innenseitigen Mutterelementes 50 und mittels einer außenseitigen Gegenmutter 52. Die Gegenmutter 52 ist zweckmäßigerweise mit einer selbstschneidenden Ringdichtung versehen.

Wie aus Fig.3 ersichtlich ist, ist das Rastelement 26 abgewinkelt mit einem Befestigungsschenkel 54 und mit einem Federschenkel 56 ausgebildet. Das Rastelement 26 ist mit seinem Befestigungsschenkel 54 am zugehörigen Laschenelement 48 befestigt, d.h. zwischen diesem und der Gegenmutter 52 festgeklemmt. Der zur Führungsstange 28 und dem Zylindergehäuse 30 parallel orientierte Federschenkel 56 des abgewinkelten Rastelementes 26 weist ein Rastorgan 58 auf. Das Rastorgan 58 ist mit einer Lasche ausgebildet, die durch einen U-förmigen Stanzschnitt des Federschenkels 56 und durch ein abgewinkeltes Biegen der gestanzten Lasche geformt ist.

Das mit dem Zylindergehäuse 30 eine Baueinheit bildende Schraubmutterelement 40 ist am Außenrand seiner dem Laschenelement 48 zugewandten Stirnfläche 60 umlaufend mit einem Wulst 62 ausgebildet, der zum temporären, loslösbaren Festhalten des Rastorganes 58 im Spannzustand des Spannfederelementes 24 vorgesehen ist.

Der Federschenkel 56 des jeweiligen abgewinkelten Rastelementes 26 ist mit einer das oben erwähnte Stanzloch überbrückenden Auflage 64 versehen. Die Auflage 64 kann von einem Plättchen aus einem Gummimaterial gebildet sein, um einen Schutz gegen Verletzungen zu bilden.

Das Betätigungselement 22 weist einen Bügel 66 und zwei mit dem Bügel materialeinstückig verbundene Schenkel 68 auf. Die Schenkel 68 liegen im montierten Zustand des Ringelementes 10 an der Felge des Fahrzeug-Rades an, um für die Schnellspanneinrichtung eine Verdrehsicherung zu bilden. Die beiden Schenkel 68 und die beiden zweiten Hakenelemente 18 sind mit dem Zylindergehäuse verschweißt.

Wie aus Fig.1 ersichtlich ist, sind die ringfesten ersten Hakenelemente 16 und die Schnellspanneinrichtungen 20 mit den zweiten Hakenelementen 18 entlang des Umfangs des einseitig offenen Ringelementes 10 einander abwechselnd gleichmäßig verteilt vorgesehen. Dabei sind die ersten Hakenelemente 16 und die zweiten Hakenelemente 18 jeweils paarweise vorgesehen. Die ringfesten ersten Hakenelemente 16 sind an den Seitenrändern 70 des zugehörigen Laschenelementes 72 festgeschweißt. Das jeweilige Laschenelement 72 steht vom Ringelement 10 axial nach innen, wie aus den Figuren 4 und 5 ersichtlich ist.

Die Funktionsweise der Erfindung ist wie folgt:
Um am Rad eines Fahrzeugs, insbesondere eines Lastkraftwagens, eines Omnibusses o.dgl. Kettenelemente zu montieren, wird zuerst an der Felge des Fahrzeug-Rades das einseitig offene Ringelement 10 befestigt. Zu diesem Zwecke wird das Spannorgan 14 aufgeweitet, bis das Ringelement 10 an der Rad-Felge fixiert ist. Danach werden nacheinander die Schnellspanneinrichtungen 20 betätigt und Kettenelemente zwischen den voneinander axial einen vergrößerten Abstand aufweisenden ersten und zweiten Hakenelementen 16 und 18 angebracht. Zu diesem Zwecke, d.h. zur Vergrößerung des Abstandes zwischen den ersten und den zweiten Hakenelementen 16 und 18 wird das Betätigungselement 22 der jeweiligen Schnellspanneinrichtung 22 betätigt, d.h. der Bügel 66 des Betätigungselementes 22 vom Ringelement 10 axial weg in das Innere der Rad-Felge gedrückt. Dabei wird der axiale Abstand zwischen dem jeweiligen ringfesten ersten Hakenelement 16, und dem zugehörigen zweiten Hakenelement 18, das mit dem Betätigungselement eine Baueinheit bildet, vergrößert. Gleichzeitig wird das Spannfederelement 28 der Schnellspanneinrichtung 20 mechanisch gespannt. In diesem axial vergrößerten Abstand kann dann ein Kettenelement am ersten und zweiten Hakenelement 16 und 18 jeweils mit einem geeigneten Kettenglied angebracht werden.

Der Federabschnitt des entsprechenden Rastelementes 26 wird gegen das Zylindergehäuse 30 gedrückt, wobei das Rastorgan 58 an der Stirnfläche des Zylindergehäuses zur Anlage kommt und temporär verrastet wird, um das zweite Hakenelement 18 temporär festzuhalten. Die temporäre Verrastung des jeweiligen Rastorganes des Rastelementes 26 mit dem zugehörigen Zylindergehäuse 30 wird dadurch sichergestellt, dass die Stirnfläche 60 des mit dem Zylindergehäuse 30 verschraubten und somit eine Baueinheit bildenden Schraubmutterelementes 40 mit einem Wulst 62 ausgebildet ist.

Sobald das jeweilige Kettenelement an dem entsprechenden ersten und einem zugehörigen zweiten Hakenelement 16 und 18 angebracht worden ist, kann durch weiteres Betätigen des Betätigungselementes 22 die Verrastung des Rastorganes 58 in Bezug zum Zylindergehäuse 30 wieder aufgehoben werden, indem sich der Federschenkel 58 des Rastelementes 26 wieder entspannen kann. Eine Freigabe des Rastorganes 58 des jeweiligen Rastelementes 26 von der Stirnfläche 60 des Schraubmutterelementes 40 kann auch ohne weiteres, d.h. direkt und unmittelbar dadurch erfolgen, dass das Fahrzeug-Rad gedreht wird, wodurch ebenfalls eine kleine Bewegung des zweiten Hakenelementes 18 vom Ringelement 10 weg erfolgt, so dass die Verrastung des Rastorganes 58 aufgehoben wird und sich der Federschenkel 56 entspannen kann. Nach dieser Freigabe des rastorganes 58 vom Zylindergehäuse 30 kann sich das Spannfederelement 24 entspannen, so dass der axiale Abstand zwischen dem jeweilige ersten Hakenelement 16 und dem zugehörigen zweiten Hakenelement 18 entsprechend verkleinert und das an diesen Hakenelementen 16 und 18 angebrachte Kettenelement um das Fahrzeug-Rad unverlierbar herumgespannt wird.

Mit Hilfe der Erfindung ist es also einfach und zeitsparend möglich, Kettenelemente an einem Rad eines Fahrzeugs, wie eines Lastkraftwagens, eines Omnibusses, eines forstwirtschaftlichen oder eines landwirtschaftlichen Fahrzeuges o.dgl. anzubringen. Genau so einfach und zeitsparend ist es möglich, Kettenelemente von einem Fahrzeug-Rad wunschgemäß auch wieder zu entfernen.

### Bezugsziffernliste:

- 10: Ringelement
- 12: Ringelement-Öffnung (von 10)
- 14: Spannorgan (an 12)
- 16: erste Hakenelemente (an 10)
- 18: zweite Hakenelemente (an 20)
- 20: Schnellspanneinrichtung (an 10 für 18)
- 22: Betätigungselement (von 20)
- 24: Spannfederelement (von 20 zwischen 38 und 40)
- 26: Rastelement (von 20)
- 28: Führungsstange (von 20 an 48)
- 30: Zylindergehäuse (von 20 für 18)
- 32: Endabschnitt (von 28)
- 34: Außengewindeabschnitt (an 32)
- 36: distales Ende (von 28)
- 38: Widerlagerkopf (an 28)
- 40: Schraubmutterelement (für 30)
- 42: Außengewindeabschnitt (von 40)
- 44: Innengewindeabschnitt (von 30)
- 46: proximales Ende (von 30)
- 48: Laschenelement (an 10 für 28)
- 50: Mutterelement (an 28)
- 52: Gegenmutter (an 28)
- 54: Befestigungsschenkel (von 26)
- 56: Federschenkel (von 26)
- 58: Rastorgan (an 54)
- 60: Stirnfläche (von 40)
- 62: umlaufender Wulst (an 60)
- 64: Auflage (an 56)
- 66: Betätigungsbügel (von 22)
- 68: Schenkel (von 22)
- 70: Seitenränder (von 72)
- 72: Laschenelement (an 10 für 16)

## Patentansprüche

1. Vorrichtung zum Verhindern eines Durchrutschens oder Durchdrehens eines Rades eines Fahrzeugs, insbesondere eines Lastkraftwagens oder eines Omnibusses, mit einem einseitig offenen Ringelement (10), dessen Ringelement-Öffnung (12) von einem Spannorgan (14) überbrückt ist, wobei am Ringelement (10) erste Hakenelemente (16) fixiert und zweite Hakenelemente (18) verstellbar vorgesehen sind, und die ersten und zweiten Hakenelemente (16, 18) zum Festlegen von Kettenelementen vorgesehen sind,
**dadurch gekennzeichnet,**
**dass** die zweiten Hakenelemente (18) an Schnellspanneinrichtungen (20) vorgesehen sind, die jeweils ein Betätigungselement (22), ein Spannfederelement (24) und ein Rastelement (26) aufweisen, wobei das Betätigungselement (22) zum Verstellen des zweiten Hakenelementes (18) und zum gleichzeitigen mechanischen Spannen des Spannfederelementes (24) und das Rastelement (26) zum temporären Festhalten des mit dem zweiten Hakenelement (18) eine Einheit bildenden Betätigungselementes (22) im Spannzustand des Spannfederelementes (24) vorgesehen ist.

2. Vorrichtung nach Anspruch 1,
**dadurch gekennzeichnet,**
**dass** die jeweilige Schnellspanneinrichtung (20) eine an dem Ringelement (10) befestigte Führungsstange (28) und ein an der Führungsstange (28) linear beweglich geführtes Zylindergehäuse (30) aufweist, wobei zwischen der Führungsstange (28) und dem Zylindergehäuse (30) das Spannfederelement (24) vorgesehen ist, und wobei das Zylindergehäuse (30) mindestens ein zweites Hakenelement (18) aufweist.

3. Vorrichtung nach Anspruch 2,
**dadurch gekennzeichnet,**
**dass** das jeweilige Zylindergehäuse (30) ein Paar zweite Hakenelemente (18) aufweist.

4. Vorrichtung nach Anspruch 2,
**dadurch gekennzeichnet,**
**dass** die jeweilige Führungsstange (28) an einem Laschenelement (48) befestigt ist, das vom Ringelement (10) radial nach innen weist.

5. Vorrichtung nach Anspruch 4,
**dadurch gekennzeichnet,**
**dass** das Rastelement (26) der jeweiligen Schnellspanneinrichtung (20) mit einem Befestigungsschenkel (54) und einem Federschenkel (56) ausgebildet ist, wobei der Befestigungsschenkel (54) am zugehörigen Laschenelement (48) befestigt ist und der Federschenkel (56) im Spannzustand des Spannfederelementes (24) am Zylindergehäuse (30) temporär festgelegt ist.

6. Vorrichtung nach Anspruch 5,
**dadurch gekennzeichnet,**
**dass** der Federschenkel (56) ein Rastorgan (58) und das Zylindergehäuse (30) eine dem Laschenelement (48) zugewandte Stirnfläche (60) mit einem Wulst (62) aufweist, der zum temporären Festhalten des Rastorgans (58) im Spannzustand des Spannfederelementes (24) vorgesehen ist.

7. Vorrichtung nach Anspruch 5 oder 6,
**dadurch gekennzeichnet,**
**dass** der Federschenkel (56) des jeweiligen Rastelementes (20) mit einer Auflage (64) versehen.

8. Vorrichtung nach einem der Ansprüche 5 bis 7,
**dadurch gekennzeichnet,**
**dass** das Betätigungselement (22) als am Zylindergehäuse (30) befestigter Verdrehsicherungsbügel (66) ausgebildet ist.

9. Vorrichtung nach einem der Ansprüche 1 bis 8,
**dadurch gekennzeichnet,**
**dass** die ringfesten ersten Hakenelemente (16) und die Schnellspanneinrichtungen (20) mit den zweiten Hakenelementen (18) entlang des Umfangs des Ringelementes (10) einander abwechselnd und gleichmäßig verteilt vorgesehen sind.

10. Vorrichtung nach einem der Ansprüche 1 bis 9,
**dadurch gekennzeichnet,**
**dass** die ersten Hakenelemente (16) am Ringelement (10) paarweise vorgesehen sind.

## Claims

1. Device for preventing a slipping or spinning of a wheel of a vehicle, in particular of a heavy goods vehicle or bus, with a ring element (10) open on one side, the ring-element orifice (12) of which is bridged by a tension member (14), first hook elements (16) being provided in a fixed manner on the ring element (10) and second hook elements (18) being provided adjustably on the said ring element, and the first and second hook elements (16, 18) being provided for the securing of chain elements, **characterized in that** the second hook elements (18) are provided on quick-action tensioning means (20) which have in each case an actuating element (22), a tension-spring element (24) and a latching element (26), the actuating element (22) being provided for the adjustment of the second hook element (18) and for the simultaneous mechanical tensioning of the tension-spring element (24), and the latching element (26) being provided for the temporary retention of the actuating element (22), forming a unit with the second hook element (18), in the tensioned state of the tension-spring element (24).

2. Device according to Claim 1, **characterized in that** the respective quick-action tensioning means (20) has a guide rod (28) fastened to the ring element (10) and a cylindrical housing (30) guided linearly movably on the guide rod (28), the tension-spring element (24) being provided between the guide rod (28) and the cylindrical housing (30), and the cylindrical housing (30) having at least one second hook element (18).

3. Device according to Claim 2, **characterized in that** the respective cylindrical housing (30) has a pair of second hook elements (18).

4. Device according to Claim 2, **characterized in that** the respective guide rod (28) is fastened to a shackle element (48) which points radially inwards from the ring element (10).

5. Device according to Claim 4, **characterized in that** the latching element (26) of the respective quick-action tensioning means (20) is designed with a fastening leg (54) and with a spring leg (56), the fastening leg (54) being fastened to the associated shackle element (48), and the spring leg (56) being secured temporarily to the cylindrical housing (30) in the tensioned state of a tension-spring element (24).

6. Device according to Claim 5, **characterized in that** the spring leg (56) has a latching member (58) and the cylindrical housing (30) has an end face (60) facing the shackle element (48) and having a bead (62) which is provided for the temporary retention of the latching member (58) in the tensioned state of the tension-spring element (24).

7. Device according to Claim 5 or 6, **characterized in that** the spring leg (56) of the respective latching element (20) is provided with a support (64).

8. Device according to one of Claims 5 to 7, **characterized in that** the actuating element (22) is designed as an anti-twist yoke (66) fastened to the cylindrical housing (30).

9. Device according to one of Claims 1 to 8, **characterized in that** the first hook elements (16) fixed to the ring and the quick-action tensioning means (20) having the second hook elements (18) are provided so as to be distributed alternately to one another and uniformly along the circumference of the ring element (10).

10. Device according to one of Claims 1 to 9, **characterized in that** the first hook elements (16) are provided in pairs on the ring element (10).

## Revendications

1. Dispositif pour empêcher un glissement ou un patinage d'une roue d'un véhicule, en particulier d'un camion ou d'un omnibus, comprenant un élément annulaire (10) ouvert d'un côté, dont l'ouverture d'élément annulaire (12) est surmontée d'un organe de serrage (14), des premiers éléments de crochet (16) étant fixés sur l'élément annulaire (10) et des deuxièmes éléments de crochet (18) étant prévus de manière déplaçable, et les premiers et deuxièmes éléments de crochet (16, 18) étant prévus pour fixer des éléments de chaîne,
**caractérisé en ce que**
les deuxièmes éléments de crochet (18) sont prévus sur des dispositifs de serrage rapide (20), qui présentent à chaque fois un élément d'actionnement (22), un élément de ressort de serrage (24) et un élément d'encliquetage (26), l'élément d'actionnement (22) étant prévu pour déplacer le deuxième élément de crochet (18) et pour simultanément serrer mécaniquement l'élément de ressort de serrage (24) et l'élément d'encliquetage (26) étant prévu pour temporairement fixer l'élément d'actionnement (22) formant une unité avec le deuxième élément de crochet (18), dans l'état de serrage de l'élément de ressort de serrage (24).

2. Dispositif selon la revendication 1,
**caractérisé en ce que**
le dispositif de serrage rapide respectif (20) présente une tringle de guidage (28) fixée à l'élément annulaire (10) et un boîtier cylindrique (30) guidé de manière déplaçable linéairement sur la tringle de guidage (28), l'élément de ressort de serrage (24) étant prévu entre la tringle de guidage (28) et le boîtier cylindrique (30), et le boîtier cylindrique (30) présentant au moins un deuxième élément de crochet (18).

3. Dispositif selon la revendication 2,
**caractérisé en ce que**
le boîtier cylindrique respectif (30) présente une paire de deuxièmes éléments de crochet (18).

4. Dispositif selon la revendication 2,
**caractérisé en ce que**
la tringle de guidage respective (28) est fixée à un élément de patte (48) qui est tourné radialement vers l'intérieur depuis l'élément annulaire (10).

5. Dispositif selon la revendication 4,
**caractérisé en ce que**
l'élément d'encliquetage (26) du dispositif de serrage rapide respectif (20) est réalisé avec une branche de fixation (54) et une branche à ressort (56), la branche de fixation (54) étant fixée sur l'élément de patte respectif (48) et la branche à ressort (56) étant fixée temporairement dans l'état de serrage de l'élément de ressort de serrage (24) sur le boîtier cylindrique (30).

6. Dispositif selon la revendication 5,
**caractérisé en ce que**
la branche à ressort (56) présente un organe d'encliquetage (58) et le boîtier cylindrique (30) présente une surface frontale (60) tournée vers l'élément de patte (48), avec un bourrelet (62), qui est prévu pour fixer temporairement l'organe d'encliquetage (58) dans l'état de serrage de l'élément de ressort de serrage (24).

7. Dispositif selon la revendication 5 ou 6,
**caractérisé en ce que**
la branche à ressort (56) de chaque élément d'encliquetage (20) est pourvue d'un appui (64).

8. Dispositif selon l'une quelconque des revendications 5 à 7,
**caractérisé en ce que**
l'élément d'actionnement (22) est réalisé sous forme d'étrier de fixation contre la rotation (66) fixé au boîtier cylindrique (30).

9. Dispositif selon l'une quelconque des revendications 1 à 8,
**caractérisé en ce que**
les premiers éléments de crochet fixes annulaires (16) et les dispositifs de serrage rapide (20) avec les deuxièmes éléments de crochet (18) sont répartis uniformément et en alternance les uns avec les autres le long de la périphérie de l'élément annulaire (10).

10. Dispositif selon l'une quelconque des revendications 1 à 9,
**caractérisé en ce que**
les premiers éléments de crochet (16) sont prévus par paires sur l'élément annulaire (10).
